# EUROPEAN PATENT APPLICATION

(11) **EP 3 882 660 A1**
(43) Date of publication of application: **22.09.2021**
(21) Application number: 21159824.8
(22) Date of filing: 01.03.2021
(51) Int. Cl.: G01S 13/04, G01S 13/08, B60W 40/08

(54) **DISPLACEMENT MEASURING APPARATUS**

(30) Priority: 20.03.2020 JP 2020050334
(71) Applicant: Alpine Electronics, Inc., Tokyo (JP)
(72) Inventor: Sakamoto, Hideki, Iwaki-city, Fukushima (JP)
(74) Representative: Schmitt-Nilson Schraud Waibel Wohlfrom Patentanwälte Partnerschaft mbB

(57) **Abstract**

A displacement measuring apparatus includes a plurality of reflective members disposed at a detection target, a signal source and a transmitting antenna that transmit a radio wave of a predetermined frequency that can pass through a human body to each of the plurality of reflective members, a receiving antenna and a mixer that receive the radio wave reflected by each of the plurality of reflective members and returned, a distance calculation unit that calculates information on distances to the plurality of reflective members based on information on a time until the transmitted radio wave returns, and a displacement-distribution measuring unit that calculates a displacement of each of the plurality of reflective members based on the information on the distances.

## Description

The present invention relates to a displacement measuring apparatus that measures the displacement of multiple portions.

There are known seat devices (for example, see JP 2018-102830 A) and known vehicle seats (for example, see JP 2018-165135 A) in which pressure-sensitive cells and pressure sensors are arranged so as to cover the entire seat to measure the pressurization (load distribution or pressure distribution) when a person sits down. These seat devices and vehicle seats allow detecting a wide range of loads exerted on the seating surface using the pressure-sensitive cells and the pressure sensors provided in two dimensions.

The output of the pressure-sensitive cells and the pressure sensors used in the seat device disclosed in JP 2018-102830 A and the vehicle seat disclosed in JP 2018-165135 A is extracted via cables. This configuration needs complicated wiring to a device that processes the output. In particular, if the number of pressure-sensitive cells or pressure sensors is large, the number of wires for extracting respective detection signals is also large. This needs wiring between the pressure-sensitive cells or the pressure sensors and the cables, resulting an increase in the complication of the wiring.

Accordingly, it is an object of the present invention to provide a displacement measuring apparatus that does not need complicated wiring for measuring the pressurization (displacement) of multiple portions according to the load.

The present invention relates to a displacement measuring apparatus according to the appended claims. Embodiments are disclosed in the dependent claims. A displacement measuring apparatus according an aspect of the present invention includes a plurality of reflective members disposed at a detection target, a transmission unit configured to transmit a radio wave of a predetermined frequency that can pass through a human body to each of the plurality of reflective members, a receiving unit configured to receive the radio wave of the predetermined frequency reflected by each of the plurality of reflective members and returned, a distance calculation unit configured to calculate information on distances to the plurality of reflective members based on information on a time until the radio wave transmitted from the transmission unit returns to the receiving unit, and a displacement calculation unit configured to calculate a displacement of each of the plurality of reflective members based on the information on the distances.

This allows measuring the displacements (pressurizations) of multiple portions according to the load exerted on the detection target by transmitting and receiving radio waves to and from the plurality of reflective members disposed at the detection target to detect the distance to each reflective member, and moreover, eliminates the need for complicated wiring because there is no need to extract signals from the detection target via cables.

The plurality of reflective members are preferably disposed at regular intervals. This prevents deterioration in measurement quality due to uneven intervals of the measurement portions.

All of the plurality of reflective members are preferably covered with a sheet-like flexible material. The material filling gaps between the plurality of reflective members preferably has a Poisson's ratio of a predetermined value or greater. This prevents the displacement of each reflective member from influencing the displacement of the other reflective members, increasing the accuracy of displacement measurement by achieving independent displacement of each reflective member.

The radio wave of the predetermined frequency is preferably a millimeter wave. The radio wave of the predetermined frequency is preferably a radio wave in a 27-GHz band or a 60-GHz band. This allows measurement of displacement, with a person seated on the detection target.

Each of the reflective members is preferably an electrically conductive material with a conductivity of a predetermined value or greater. Each of the reflective members is preferably a magnetic material with a magnetic permeability of a predetermined value or greater. The radio wave transmission depth L in the surface of the reflective member is expressed as √(2/µσω), where µ is the magnetic permeability of the material, σ is the electrical conductivity of the material, and ω is the frequency of the radio wave. Accordingly, the transmission depth L can be decreased to make it easy to reflect radio waves by increasing the electrical conductivity and/or the magnetic permeability of the reflective member.

The detection target is preferably a seat of a vehicle, and the transmission unit and the receiving unit are preferably disposed at a ceiling of the vehicle. This configuration allows easily measuring the displacement distribution when an occupant seated is on the vehicle seat with a complicated shape without cumbersome wiring.
Fig. 1 is a diagram showing the configuration of a displacement measuring apparatus according to an embodiment of the present invention;
Fig. 2A is a plan view of an example of a reflective sheet according to an embodiment of the present invention;
Fig. 2B is a cross-sectional view of the reflective sheet;
Fig. 3 is a diagram illustrating the specific configuration of a radar according to an embodiment of the present invention; and
Fig. 4 is a diagram illustrating an example of the arrangement of the radar and the reflective sheet.

A displacement measuring apparatus according to embodiments of the present invention will be described hereinbelow with reference to the drawings.

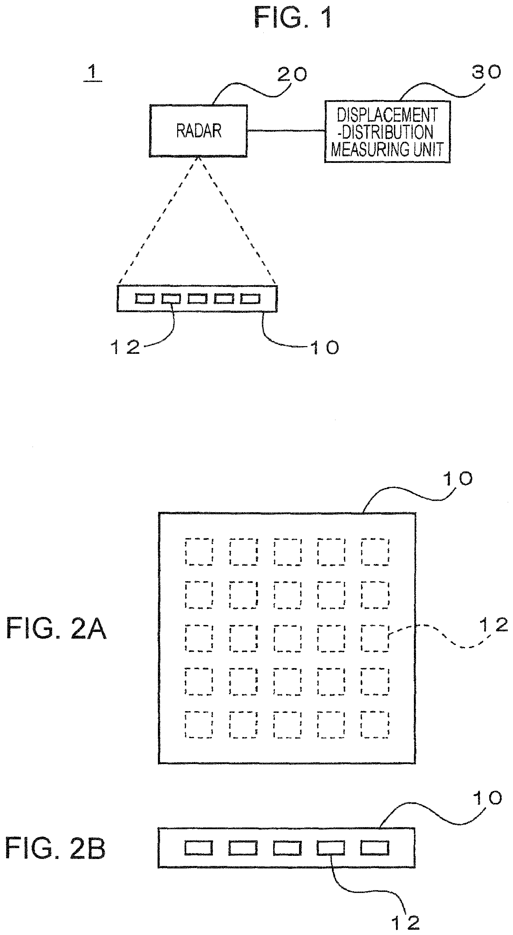

Fig. 1 is a diagram showing the configuration of a displacement measuring apparatus according to an embodiment of the present invention. The displacement measuring apparatus 1 of this embodiment shown in Fig. 1 is for measuring the displacement distribution of the seat of a vehicle (detection target), with an occupant, such as a driver, seated. To this end, the displacement measuring apparatus 1 includes a reflective sheet 10 in which a plurality of reflective members 12 are embedded, a radar 20, and a displacement-distribution measuring unit 30.

The reflective sheet 10 is made of a sheet-like flexible material with a Poisson ratio equal to or higher than a predetermined value and includes therein a plurality of reflective members 12 arranged at regular intervals.

Figs. 2A and 2B are diagrams illustrating an example of the reflective sheet 10. Fig. 2A is a plan view, and Fig. 2B is a cross-sectional view of the reflective sheet 10. As illustrated in the drawings, the reflective sheet 10 has therein a total of 25 reflective members 12 in five rows and five columns. Each reflective member 12 is formed of an electrically conductive material and/or a magnetic material having a rectangular shape, for example, with a side of 11 mm.

The radio wave transmission depth L in the surface of the reflective member 12 is generally expressed as √(2/µσω), where µ is the magnetic permeability of the material, σ is the electrical conductivity of the material, and ω is the frequency of the radio wave. Accordingly, the transmission depth L can be decreased to make it easy to reflect radio waves by increasing the electrical conductivity σ or the magnetic permeability µ of the reflective member 12. In this embodiment, the reflective member 12 is made of an electrically conductive material with an electrical conductivity of σ1 or higher and/or a magnetic material with a magnetic permeability of µ1 or higher. Specific values of σ1 and µ1 may be determined in designing the product on the basis of the frequency, the intensity of the radio wave used, and the distance between the radar 20 and each reflective member 12.

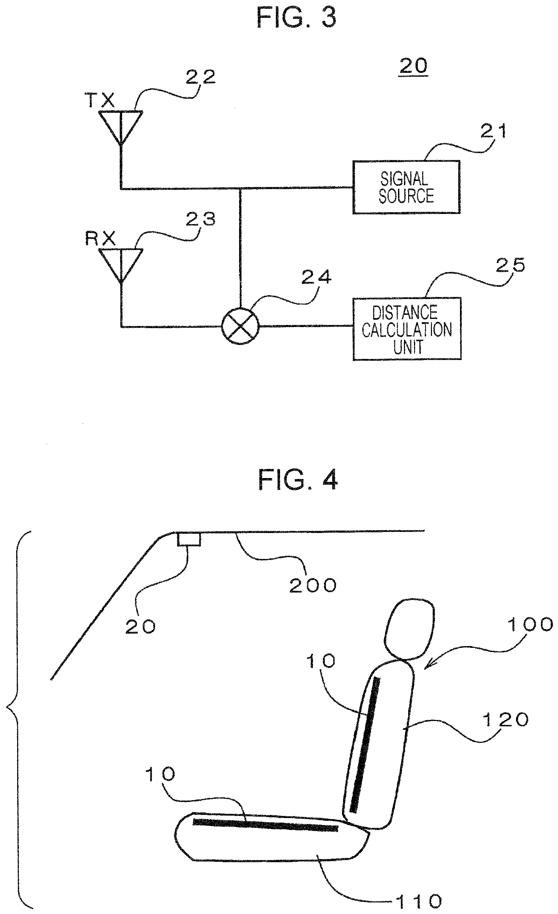

The radar 20 detects the distances to the plurality of reflective members 12 using a radio wave of a predetermined frequency. Fig. 3 is a diagram illustrating the specific configuration of the radar 20. As illustrated in Fig. 3, the radar 20 includes a signal source 21 that generates a signal of a predetermined frequency, a transmitting antenna (TX) 22 that transmits a radio wave corresponding to this signal to each reflective member 12 of the reflective sheet 10, a receiving antenna (RX) 23 that receives a reflected wave reflected by each reflective member 12 corresponding to this signal, a mixer 24 that mixes the transmitted signal and the received signal, and a distance calculation unit 25 that calculates the distance to each reflective member 12 by detecting the time until the radio wave transmitted from the radar 20 is reflected by each reflective member 12 back to the radar 20 on the basis of the output of the mixer 24. The signal source 21 and the transmitting antenna 22 correspond to a transmission unit that transmits a radio wave. The receiving antenna 23 and the mixer 24 correspond to a reception unit that receives the radio wave.

An example of the radio waves transmitted and received by the radar 20 is a radio wave of a predetermined frequency that can pass through a human body, for example, millimeter waves. Specifically, a radio wave in a 27-GHz band or a 60-GHz band may be used.

Fig. 4 is a diagram illustrating an example of the arrangement of the radar 20 and the reflective sheet 10. In Fig. 4, the reflective sheet 10 is disposed in each of a seat cushion 110 and a seat back 120 of a vehicle seat 100. The radar 20 that transmits and receives radio waves to and from the two reflective sheets 10 is disposed in common on the ceiling 200 of the vehicle. The radar 20 may be provided for each of the two reflective sheets 10 to transmit and receive radio waves.

The displacement-distribution measuring unit 30 obtains the distance from the radar 20 to each reflective member 12 at a predetermined cycle to measure the displacement (displacement distribution) of each reflective member 12. The difference between the preceding distance to each reflective member 12 and the present distance is the displacement of one cycle of measurement, and its cumulative value is the displacement of all of the reflective members 12. In this embodiment, the displacement is obtained. Alternatively, the pressure (pressure distribution) may be obtained using the young's moduli of the seat cushion 110, the seat back 120, and the reflective sheet 10.

Thus, the displacement measuring apparatus 1 of this embodiment can measure the displacements (pressurizations) of multiple portions according to the load exerted on the detection target by transmitting and receiving radio waves to and from the plurality of reflective members 12 disposed in the detection target to detect the distance to each reflective member 12, and moreover, does not need complicated wiring because there is no need to extract signals from the detection target via cables.

Furthermore, arranging the plurality of reflective members 12 at regular intervals prevents deterioration in measurement quality due to uneven intervals of the measurement portions.

The reflective sheet 10 is used in which all of the plurality of reflective members 12 are covered with a flexible sheet-like material, and the Poisson's ratio of the material that fills the gap between the plurality of reflective members 12 is set at a predetermined value or greater. This prevents the displacement of each reflective member 12 from influencing the displacement of the other reflective members 12, increasing the accuracy of displacement measurement by achieving independent displacement of each reflective member 12.

Using millimeter waves, specifically, in a 27-GHz band or a 60-GHz band, as the radio waves of a predetermined frequency to be transmitted to and received from the radar 20 allows measurement of displacement, with a person seated on the detection target.

Furthermore, the reflective members 12 are made of an electrically conductive material with an electrical conductivity of a predetermined value or greater or a magnetic material with a magnetic permeability of predetermined value or greater. The radio wave transmission depth L in the surface of the reflective member 12 is expressed as √(2/µσω), where µ is the magnetic permeability of the material, σ is the electrical conductivity of the material, and ω is the frequency of the radio wave. Accordingly, the transmission depth L can be decreased to make it easy to reflect radio waves by increasing the electrical conductivity or the magnetic permeability of the reflective member 12.

Using the seat 100 (Fig. 4) of a vehicle as the detection target, and disposing the radar 20 on the ceiling 200 (Fig. 4) of the vehicle allows easily measuring the displacement distribution when an occupant is seated on the vehicle seat 100 with a complicated shape without cumbersome wiring.

It is to be understood that the present invention is not limited to the above embodiment, and various modifications are possible within the scope of the present invention. Although, in the above embodiment (Fig. 4), the displacement of the vehicle seat 100 is measured, the present invention can also be applied to any other targets other than the seat the displacement distribution or the pressure distribution of which is to be measured. For example, the present invention can also be applied measurement of the displacement distribution or the pressure distribution of an area to which a load is applied, such as a bed and an arm rest. The present invention can also be applied to determination of the barycentric position of the sole of the foot by measuring the displacement distribution or the pressure distribution.

Thus, the present invention allows measuring the displacements (pressurizations) of multiple portions according to the load exerted on a detection target by transmitting and receiving radio waves to and from a plurality of reflective members disposed in the detection target to detect the distance to each reflective member, and moreover, does not need complicated wiring because there is no need to extract signals from the detection target via cables.

## Claims

1. A displacement measuring apparatus (1) comprising:
a plurality of reflective members (12) disposed at a detection target;
a transmission unit (21, 22) configured to transmit a radio wave of a predetermined frequency that can pass through a human body to each of the plurality of reflective members (12);
a receiving unit (23, 24) configured to receive the radio wave of the predetermined frequency reflected by each of the plurality of reflective members (12) and returned;
a distance calculation unit (25) configured to calculate information on distances to the plurality of reflective members (12) based on information on a time until the radio wave transmitted from the transmission unit (21, 22) returns to the receiving unit (23, 24); and
a displacement calculation unit (30) configured to calculate a displacement of each of the plurality of reflective members (12) based on the information on the distances.

2. The displacement measuring apparatus (1) according to Claim 1, wherein the plurality of reflective members (12) are disposed at regular intervals.

3. The displacement measuring apparatus (1) according to Claim 1 or 2, wherein all of the plurality of reflective members (12) are covered with a sheet-like flexible material.

4. The displacement measuring apparatus (1) according to Claim 3, wherein the material filling gaps between the plurality of reflective members (12) has a Poisson's ratio of a predetermined value or greater.

5. The displacement measuring apparatus (1) according to any one of Claims 1 to 4, wherein the radio wave of the predetermined frequency comprises a millimeter wave.

6. The displacement measuring apparatus (1) according to Claim 5, wherein the radio wave of the predetermined frequency comprises a radio wave in a 27-GHz band or a 60-GHz band.

7. The displacement measuring apparatus (1) according to one of Claims 1 - 6, wherein the reflective members (12) comprise an electrically conductive material with a conductivity of a predetermined value or greater.

8. The displacement measuring apparatus (1) according to one of Claims 1 - 7, wherein the reflective members (12) comprise a magnetic material with a magnetic permeability of a predetermined value or greater.

9. The displacement measuring apparatus (1) according to one of Claims 1 - 8,
wherein the detection target comprises a seat of a vehicle, and
wherein the transmission unit (21, 22) and the receiving unit (23, 24) are disposed at a ceiling of the vehicle.
